# EUROPEAN PATENT SPECIFICATION

(11) **EP 4 062 388 B1**
(45) Date of publication and mention of the grant of the patent: **06.05.2026**
(21) Application number: 19953303.5
(22) Date of filing: 22.11.2019
(51) Int. Cl.: G08G 1/16

(54) **VEHICLE MANEUVER INFORMATION EXCHANGE WITH TEMPORAL WINDOW**
AUSTAUSCH VON FAHRZEUGMANÖVERINFORMATIONEN MIT ZEITFENSTER
ÉCHANGE D'INFORMATIONS DE MANOEUVRE DE VÉHICULE AVEC FENÊTRE TEMPORELLE

(43) Date of publication of application: 28.09.2022
(73) Proprietor: QUALCOMM INCORPORATED, San Diego, California 92121-1714 (US)
(72) Inventor: VASSILOVSKI, Dan, San Diego, California 92121-1714 (US); CHENG, Hong, San Diego, California 92121-1714 (US); YU, Lan, San Diego, California 92121-1714 (US); MARSH, Gene, Wesley, San Diego, California 92121-1714 (US)
(74) Representative: Reddie & Grose LLP
(86) International application number: PCT/CN2019/120303
(87) International publication number: WO 2021/097810

(56) References cited:
- EP-A1- 3 351 025
- WO-A1-2017/174601
- WO-A1-2018/042003
- US-A1- 2019 164 424
- US-A1- 2019 176 830
- US-A1- 2019 184 893
- US-A1- 2019 184 893
- US-A1- 2019 184 893
- US-A1- 2019 221 118
- US-B2- 10 451 730
- US-B2- 9 061 775

## Description

### BACKGROUND

### Background Field

The subject matter disclosed herein relates to wireless communications systems, and more particularly to methods and apparatuses for vehicle maneuver exchange in a wireless communications system.

### Relevant Background

Obtaining accurate position information for user equipment, such as cellular telephones or other wireless communication devices, is becoming prevalent in the communications industry. For example, obtaining highly accurate locations of vehicles or pedestrians is essential for autonomous vehicle driving and pedestrian safety applications.

Coordinated or automated driving requires communications between vehicles, which may be direct or indirect, e.g., via an infrastructure component such as a road side unit (RSU). Inter-vehicle communications, for example, may be used to negotiate maneuvers necessary for automated driving. The inter-vehicle communications used to negotiate maneuvers may provide a current state and a planned (future) intent of a vehicle. The message exchange during these communications, however, necessarily requires time, during which conditions of either the initiating vehicle, the responding vehicle or both may change.

US 2019/176830 A1 describes instructions executable by a processor to identify a relative area within a specified distance from a first vehicle and free of another vehicle, identify a second vehicle within a second specified distance of the relative area, transmit the relative area to the second vehicle, and navigate the first vehicle to the relative area within a specified time. US 2019/184893 A1 describes communicating an intention of an automated vehicle to at least one road user. WO 2017/174601 A1 describes a method for enhancing a cooperative awareness arrangement in which information is exchanged between vehicles using mobile communication transmissions.

### SUMMARY

An aspect of the invention relates to a method of performing information exchange for maneuver execution in accordance with appended claim 1.

Another aspect of the invention relates to a device configuted to perform information exchange for maneuver execution in accordance with appended claim 8.

### BRIEF DESCRIPTION OF THE DRAWING

Non-limiting and non-exhaustive aspects are described with reference to the following figures, wherein like reference numerals refer to like parts throughout the various figures unless otherwise specified.
FIG. 1 illustrates a wireless communication system in which a user equipment (UE), illustrated as a vehicle, is in wireless communications with other entities in the wireless communication system.
FIG. 2 illustrates an example of a lane change maneuver to be performed by a vehicle.
FIG. 3 illustrates an example of a left hand turn maneuver to be performed by a vehicle.
FIG. 4 illustrates an example of an intended lane merge maneuver to be executed by a vehicle using an on-ramp to merge on a road occupied by another vehicle.
FIG. 5A is a signal flow illustrating an example of a successful maneuver request-response in an inter-vehicle message exchange initiated by a vehicle for a lane merge maneuver, such as illustrated in FIG. 4.
FIG. 5B is a signal flow illustrating an example of a successful maneuver request-response in an inter-vehicle message exchange initiated by a road side unit for a lane merge maneuver to be executed by a vehicle, such as illustrated in FIG. 4.
FIG. 6 illustrates the initiation of the lane merge maneuver by the vehicle from FIG. 4 after a successful maneuver request-response in an inter-vehicle message exchange as illustrated in FIGs. 5A and 5B.
FIG. 7 is a signal flow illustrating an example of a failed maneuver request-response in an inter-vehicle message exchange initiated by a vehicle for a lane merge maneuver, such as illustrated in FIG. 4.
FIG. 8 illustrates the cancellation of the lane merge maneuver by the vehicle from FIG. 4 after a failed maneuver request-response in an inter-vehicle message exchange as illustrated in FIG. 7.
FIG. 9 illustrates an example of an intended right turn maneuver to be executed by a vehicle in front of another vehicle.
FIG. 10 is a signal flow illustrating an example of an inter-vehicle message exchange that includes information about an intended maneuver by a vehicle for a right turn maneuver, such as illustrated in FIG. 9.
FIG. 11 is a flow chart illustrating a method of performing information exchange for maneuver execution performed by a device in a vehicle.
FIG. 12 is a flow chart illustrating a method of performing information exchange for maneuver execution performed by a road side unit.
FIG. 13 is a flow chart illustrating a method of performing information exchange for maneuver execution initiated by a road side unit.
FIG. 14 is a diagram illustrating an example of a hardware implementation of a user equipment (UE) for a vehicle capable of performing information exchange for maneuver execution by the vehicle.
FIG. 15 is a diagram illustrating an example of a hardware implementation of a road side unit capable of performing information exchange for maneuver execution by a vehicle.

### DETAILED DESCRIPTION

Inter-vehicle communications may be used, for example, for coordinated maneuvers used in automated driving. The inter-vehicle communications may be direct, e.g., vehicle to vehicle, or may be indirect, e.g., via an infrastructure component such as a road side unit (RSU). The inter-vehicle communications may include messaged and information elements (IEs) with which an initiating vehicle may provide, e.g., a request for a coordinated driving maneuver in which a response is expected or simply information with respect to a maneuver that the initiating vehicle intends to perform.

Application layer messages and IEs to support coordinated driving are being defined by various standards development organizations. For example, Society of Automotive Engineers (SAE) is preparing work item J3186 Maneuver Sharing and Coordinating Service and J2945/6 Performance Requirements for Cooperative Adaptive Cruise Control and Platooning. In China, Baidu has initiated a Phase 3 message definition effort for coordinated driving. Such messages are prerequisites for automated driving, which require vehicles to negotiate maneuvers by exchanging a current state and planned (future) intent.

In general, a vehicle planning a maneuver, or an infrastructure component (RSU) planning a maneuver on behalf of a vehicle, provides a maneuver start and stop time, start and stop location, and in some cases maneuver trajectory. For example, a lane change requires specification of when a vehicle will begin to enter the target lane, and when the vehicle will have completed the lane change. Similarly, a vehicle approaching a non-signalized intersection with intent to turn left, may include in its messaging when it will arrive at the intersection, when it will initiate the left turn and the time duration required to execute the left turn.

The inter-vehicle message exchange required to inform other vehicles of an intended driving maneuver or to negotiate a cooperative maneuverer results in time transpiring between the initial request, the response received if any, and the initiation of the maneuver. During the transpiring of the time, conditions for the initiating vehicle, the responding vehicle, or both may change. For example, a vehicle issuing a request to enter a freeway from an on-ramp may require a response from the approaching vehicles by a specific time. If the response is received after the specific time the vehicle may not have sufficient time to accelerate onto the freeway.

To ensure the highest likelihood of maneuver success, each maneuver message (e.g., requesting a coordinated maneuver or informing of an intended maneuver) from an initiating vehicle may be assigned a temporal window. The temporal window may be applied to the start time of the maneuver. In some implementations, the temporal window may also be applied to the stop time. In some implementations, a spatial window may be applied, e.g., to the start location and/or stop location for the same maneuver or a different maneuver.

In one implementation, a set of application-layer information elements (IEs) delineating temporal window for the start of maneuvers (e.g., planned maneuvers or cooperative maneuvers) may be used in coordinated driving. The IEs may similarly delineate a temporal window for the stop of such maneuvers. The IEs may similarly delineate a spatial window for the start and/or stop locations of driving maneuvers. The application of temporal (and optionally spatial) window parameters improves vehicles' and RSUs' ability to successfully plan and negotiate coordinated maneuvers by incorporating the appropriate margins.

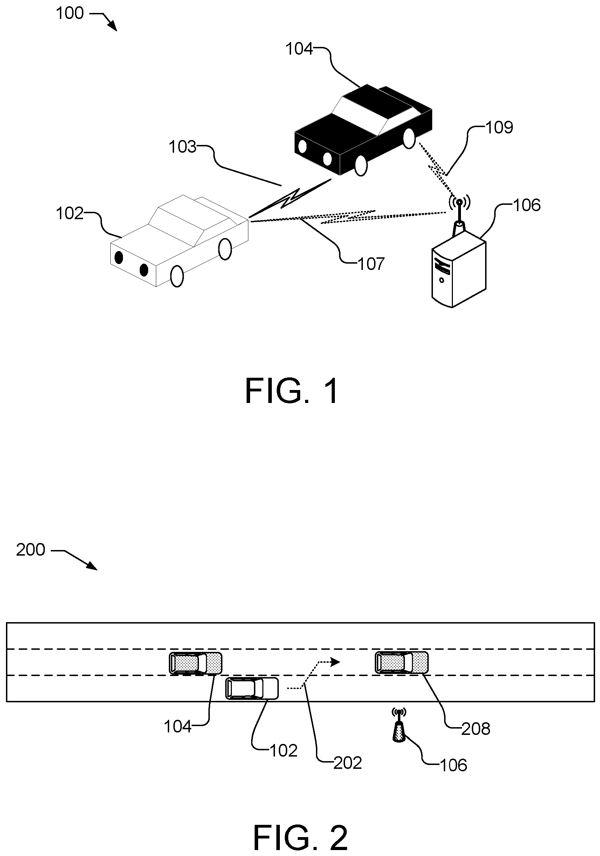

**FIG. 1** illustrates a wireless communication system 100 in which a first vehicle with a first wireless device, e.g., user equipment (UE) 102 located within the vehicle, referred to herein sometimes as vehicle 102, is in wireless communications with another UE 104, illustrated as a vehicle in the wireless communication system 100. The UE 102 may comprise, but is not limited to, an on board unit (OBU), a vehicle or subsystem thereof, or various other communication devices. The UEs 102 and 104 function and provide communications on behalf of the vehicles and, accordingly, may be sometimes referred to herein as vehicles 102 and 104. As illustrated, the vehicle 102 may directly communicate with vehicle 104 via communication link 103. In other implementations, vehicle 102 may indirectly communicate with vehicle 104 through a road side unit (RSU) 106 or other an infrastructure entity, via communication links 107 and 109. The communications may use cellular vehicle-to-everything (CV2X), e.g., defined by 3rd Generation Partnership Project (3GPP), and includes vehicle-to-vehicle (V2V), vehicle-to-infrastructure (V2I), and vehicle-to-pedestrian (V2P) communications that is independent of a cellular network, as well as network communications (V2N) in traditional mobile broadband licensed spectrum. Other types of communications, such as dedicated short range communications (DSRC), may be used if desired.

A road side unit (RSU) is a stationary infrastructure entity, that may support V2X applications and that can exchange messages with other entities supporting V2X applications. An RSU may be a logical entity that may combine V2X application logic with the functionality of base stations in a Radio Access Network (RAN), such as an evolved Node B (eNB) or next generation evolved Node B (ng-eNB) in LTE wireless access and/or evolved LTE (eLTE) wireless access (referred to as eNB-type RSU) or a NR Node B (gNB) in Fifth Generation (5G) wireless access, or a user equipment (UE) (referred to as UE-type RSU). The vehicles102, 104 and RSU 106 may communicate with additional entities, such as additional vehicles, RSUs or pedestrians (not shown) using direct or indirectly communication links.

The wireless communication may be over vehicle-to-vehicle or vehicle-to-infrastructure wireless communications, e.g., Proximity-based Services (ProSe) Direction Communication (PC5) reference point as defined by 3GPP, and may use wireless communications under IEEE 1609, Wireless Access in Vehicular Environments (WAVE), Intelligent Transport Systems (ITS), and IEEE 802.11p or other wireless connections between entities.

**FIG. 2** is a diagram 200 illustrating a lane change maneuver, where vehicle 102 intends on changing lanes in between vehicles 104 and 208, as illustrated by arrow 202. The vehicle 102 may initiate an inter-vehicle message exchange with vehicle 104 and any other affected vehicles. While vehicle 208 is present on the road in the intended lane of vehicle 102, but vehicle 208 is in front of vehicle 102, thus, may not be affected by the proposed lane change of vehicle 102. Accordingly, in some implementations vehicle 208 may be excluded from an inter-vehicle negotiation for the lane change maneuver. The vehicle 208, however, may receive a maneuver message from vehicle 102 informing vehicle 208 that vehicle 102 will perform a lane change, e.g., without requiring a response from vehicle 208. The inter-vehicle message exchange between vehicles 102 and 104 (and vehicle 208) may be direct or indirect, e.g., via RSU 106.

The inter-vehicle message exchange may include a maneuver message which may provide vehicle 104 with information regarding the intended maneuver or may request the cooperation of vehicle 104 in performing the maneuver. As illustrated in FIG. 2, vehicle 104 may be affected by the lane change of vehicle 102, and thus a maneuver request, e.g., seeking cooperation of vehicle 104, may be provided by vehicle 102. In some implementations, the RSU 106 may provide a maneuver message instructing the vehicle 102 to initiate a maneuver, e.g., the lane change, and may provide a maneuver message, e.g., information regarding the maneuver or to request the cooperation, to vehicle 104.

Coordinated driving maneuvers between vehicles 102 and 104, for example, require inter-vehicle negotiation. These message exchanges involved in the negotiation necessarily take time, such that by the time a response to a request is received the conditions presented to vehicle 102 proposing the maneuver may have changed. Similarly, vehicle 104 receiving a maneuver request will recognize the maneuver will require some time to execute (potentially as a function of proposed maneuver).

In order for the vehicle 102 proposing the maneuver to inform the receiving vehicle(s) 104 of the temporal sensitivity of the proposed maneuver, and in order for the receiving vehicle(s) 104 to determine if they can accept the proposed maneuver, if a maneuver request is presented, a temporal window may be included for the maneuver, e.g., for the start time and optionally for the stop time. In some implementations, a spatial window defining a range of distance for a start location or stop location or both, may be included with the temporal window or may be used without the temporal window for driving maneuvers.

While FIG. 2 illustrates a lane change maneuver, it should be understood that the present disclosure is applicable to other types of vehicle maneuvers, such as, e.g., merging, turning, parking, etc.

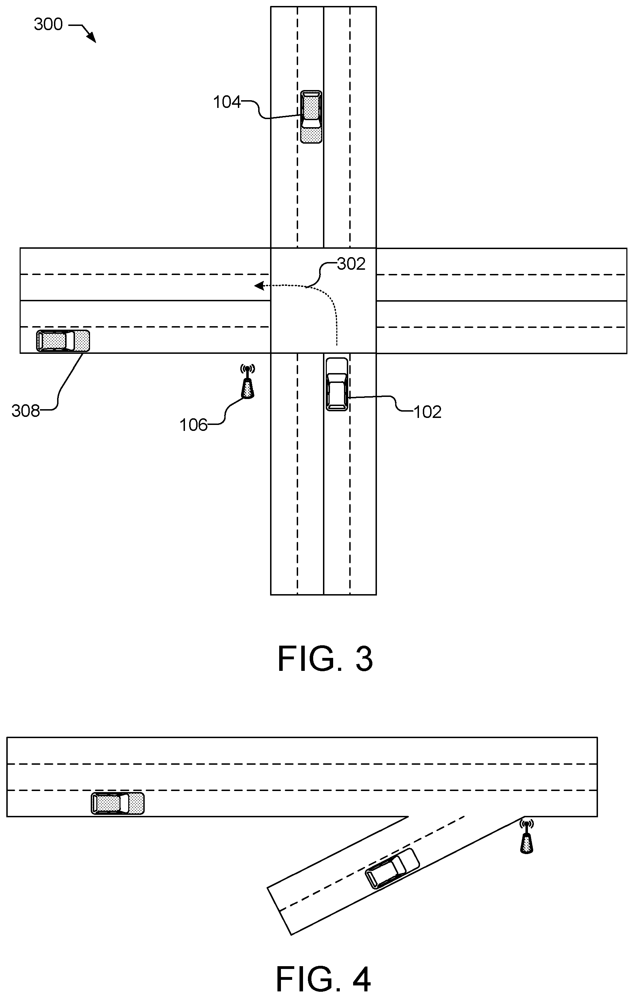

**FIG. 3****,** by way of example, is a diagram 300 illustrating a left hand turn maneuver through an intersection that is being executed by vehicle 102, as illustrated by arrow 302. Vehicle 102 may engage with vehicle 104 in an inter-vehicle negotiation so that the left hand turn may be performed safely. Vehicle 102 may likewise engage vehicle 308 in an inter-vehicle negotiation to safely perform the left hand turn maneuver, e.g., if the intersection is uncontrolled. During the inter-vehicle negotiation, the vehicle 102 may provide maneuver messages to vehicles 102 and 308 indicating a temporal window for the maneuver start time. The maneuver messages may also indicate a temporal window for the maneuver stop time.

In some implementations a spatial window defining a range of distance for one of a start location or stop location or both may be provided in the maneuver message or in other maneuver messages, e.g., that do not include temporal windows. For example, in a vehicle maneuver where spatial relationships are critical, e.g., in parking, lane changes in traffic, etc., a spatial window may be included along with or instead of a temporal window.

The temporal window for maneuvers may be including in an application-layer information element (IE), such as those defined by Society of Automotive Engineers (SAE). The temporal window, for example, may be applied to any maneuver, e.g. a coordinated maneuver. Table 1, for example, illustrates data fields and descriptions for temporal windows for a maneuver start time.

**TABLE 1**

| Data Field | Description | Data Element |
|---|---|---|
| Maneuver Start Time | Start Time Initialization | DF_DTime |
| | Start Time Window | DF_Duration |

Table 2, for example, illustrates data fields and descriptions for temporal windows for a maneuver stop time.

**TABLE 2**

| Data Field | Description | Data Element |
|---|---|---|
| Maneuver Stop Time | Stop Time Initialization | DF_DTime |
| | Stop Time Window | DF_Duration |

Table 3, for example, illustrates definitions for the data elements of Table 1 and Table 2.

**TABLE 3**

| DF_DTime | DF_Duration |
|---|---|
| DE_DHour ::= INTEGER (0..31) -- units of hours | DE_Duration ::= INTEGER (0..3600)units of seconds |
| DE_DMinute ::= INTEGER (0..63)units of minutes | |
| DE_DSecond ::= INTEGER (0..65535)units of milliseconds | |

In some implementations, a spatial window for maneuvers may be provided in a similar manner as the temporal window, e.g., in an application-layer information element (IE), such as those defined by Society of Automotive Engineers (SAE). The spatial window, for example, may be applied to any maneuver, e.g. a coordinated maneuver. Tables 4 and 5, for example, illustrates data fields and descriptions for spatial windows for a maneuver start location.

**TABLE 4**

| Data Field | Description | Data Element |
|---|---|---|
| Maneuver Start Location | Distance from current vehicle position | DE_DistanceUnits |
| | Spatial extent over which maneuver may be started | DE_Extent |

**TABLE 5**

| Data Field | Description | Data Element |
|---|---|---|
| Maneuver Start Location | Location (Latitude,Longitude) | DE_Latitude |
| | | DE_Longitude |
| | Spatial extent over which maneuver may be started | DE_Extent |

Tables 6 and 7, for example, illustrates data fields and descriptions for spatial windows for a maneuver stop location.

**TABLE 4**

| Data Field | Description | Data Element |
|---|---|---|
| Maneuver Stop Location | Distance from current vehicle position | DE_DistanceUnits |
| | Spatial extent over which maneuver may be completed | DE_Extent |

**TABLE 5**

| Data Field | Description | Data Element |
|---|---|---|
| Maneuver Stop Location | Location (Latitude,Longitude) | DE_Latitude |
| | | DE_Longitude |
| | Spatial extent over which maneuver may be started | DE_Extent |

FIG. 4 is a diagram 400 illustrating an intended lane merge maneuver to be executed by vehicle 102 using an on-ramp to merge on a road occupied by vehicle 104. The vehicle 102 may broadcast a lane merge request that includes a temporal window via an inter-vehicle message exchange to vehicle 104 and any other affected vehicles. The inter-vehicle message exchange between vehicles 102 and 104 may be direct or indirect, e.g., via RSU 106.

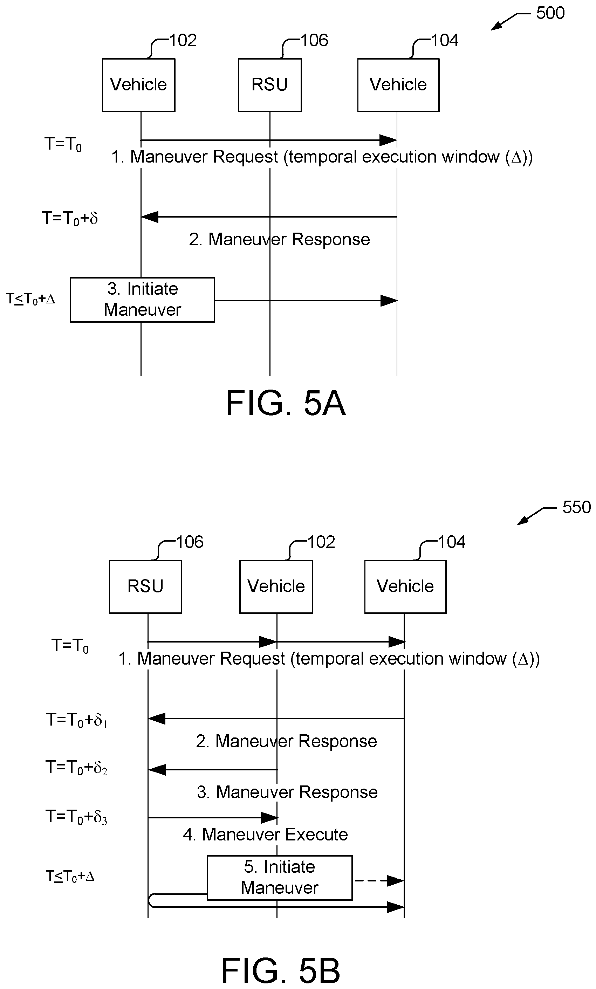

FIG. 5A is a signal flow 500 illustrating an example of a successful maneuver request-response in an inter-vehicle message exchange initiated by vehicle 102 for a lane merge maneuver, such as illustrated in FIG. 4. **In** FIG. 5, the maneuver request-response is successful because the response to the maneuver request is received within the temporal execution window.

At stage 1 of FIG. 5A, the vehicle 102 broadcasts a maneuver message, e.g., a maneuver request, that is received by vehicle 104 at time T=T₀. FIG. 4, by way of example, may illustrate the positions of vehicles 102 and 104 at time T=T₀. The maneuver request includes a temporal execution window (Δ), e.g., a temporal window for the maneuver start time. The temporal window, for example, may be a range of time after the proposed start time that the vehicle 102 may safely execute the maneuver. In another implementation, the temporal window may be a range of time before or after the proposed start time that the vehicle may safely execute the maneuver. The maneuver request may also indicate a temporal window for the maneuver stop time. The maneuver request of stage 1 may be transmitted directly to vehicle 104 or may be transmitted indirectly through RSU 106. For example, the maneuver request may be transmitted from the vehicle 102 to the RSU 106 and the RSU 106 may transmit the maneuver request to the vehicle 104. The maneuver request may also or alternatively include a spatial window defining a range of distance for one of a start location or stop location or both for the driving maneuver.

The vehicle 102 may be aware of other vehicles in the vicinity, e.g., vehicle 104, and will wait for a maneuver response accepting the maneuver request before executing the lane merge maneuver. For example, vehicle 102 may be aware of vehicle 104 because the vehicles 102 and 104 may broadcast messages at regular intervals announcing their identification, location and motion state. In the SAE description these are "Basic Safety Messages," (BSM) and in the ETSI-ITS description these are "Cooperative Awareness Messages" (CAM). These describe the current state of the vehicle broadcasting them. Additionally, vehicle 102 may be aware of vehicle 104 because the RSU 106 may be equipped with sensors, such as cameras, radar, lidar, etc., through which the RSU may detect the location and motion state of vehicle 104 (and vehicle 102) and may disseminate this information to other vehicles, e.g., to vehicle 102. Additionally, vehicle 102 may be aware of vehicle 104 because the RSU 106 may determine the presence of vehicle 104 by receiving BSM/CAM transmissions from vehicle 104 and in turn may disseminate this information to other vehicles, e.g., to vehicle 102.

At stage 2, the vehicle 102 waits for the maneuver response accepting the maneuver request before executing the lane merge maneuver. The vehicle 104 transmits a maneuver response that is received by the vehicle 102 at time T=T₀+δ, where δ<Δ. The maneuver response, for example, may indicate that vehicle 104 accepts the maneuver request, acknowledging that vehicle 102 may conduct the maneuver within the prosed execution window. Like the maneuver request, the maneuver response of stage 2 may be may be transmitted directly to vehicle 102 or may be transmitted indirectly through RSU 106. For example, the maneuver response may be transmitted from the vehicle 104 to the RSU 106 and the RSU 106 may transmit the maneuver response to the vehicle 102.

At stage 3, the vehicle 102 initiates the lane merge maneuver at time T≤ T₀+Δ, because the maneuver request of stage 1 was accepted by vehicle 104 at stage 2 within the temporal window (Δ). The vehicle 102 may provide a message informing vehicle 104 of the precise maneuver initiation time.

**FIG. 5B** is a signal flow 550 illustrating an example of a successful maneuver request-response in an inter-vehicle message exchange initiated by RSU 106 for a lane merge maneuver to be executed by vehicle 102, such as illustrated in FIG. 4. In FIG. 5, the maneuver request-response is successful because the response to the maneuver request is received within the temporal execution window.

At stage 1 of FIG. 5B, the RSU 106 transmits one or more maneuver messages, e.g., a maneuver request for the lane merge maneuver of vehicle 102, that is received by vehicle 104 at time T=T₀. FIG. 4, by way of example, may illustrate the positions of vehicles 102 and 104 at time T=T₀. The maneuver request to the first vehicle 102 and the maneuver request to the second vehicle 104 includes a temporal execution window (Δ), e.g., a temporal window for the maneuver start time. The temporal window, for example, may be a range of time after the proposed start time that the vehicle 102 may safely execute the maneuver. In another implementation, the temporal window may be a range of time before or after the proposed start time that the vehicle may safely execute the maneuver. The maneuver request may also indicate a temporal window for the maneuver stop time. The maneuver request may also or alternatively include a spatial window defining a range of distance for one of a start location or stop location or both for the driving maneuver.

At stage 2, the vehicle 104 transmits a maneuver response that is received by the RSU 106 at time T=T₀+δ₁, where δ₁<Δ. The maneuver response, for example, may indicate that vehicle 104 accepts the maneuver request.

At stage 3, the vehicle 102 transmits a maneuver response that is received by the RSU 106 at time T=T₀+δ₂, where δ₂<Δ. The maneuver response from vehicle 102, for example, may indicate that vehicle 102 accepts the maneuver request.

At stage 4, the RSU 106 waits for maneuver responses from vehicles 102 and 104 accepting the maneuver request before instructing the vehicle 102 to execute the lane merge maneuver. The RSU 106 transmits a maneuver execute message that is received by the vehicle 102 at time T=T₀+δ₃, where δ₃<Δ. The maneuver execute message, for example, indicates that vehicle 102 is to execute the lane merge maneuver because the maneuver request of stage 1 was accepted by vehicles 104 and 102 at stages 2 and 3, respectively, within the temporal window (Δ).

At stage 5, the vehicle 102 initiates the lane merge maneuver at time T≤ T₀+Δ, in response to the maneuver execute message of stage 4. The vehicle 102 may provide a message informing vehicle 104 of the precise maneuver initiation time either directly (as indicated by dashed arrow) or indirectly through RSU 106.

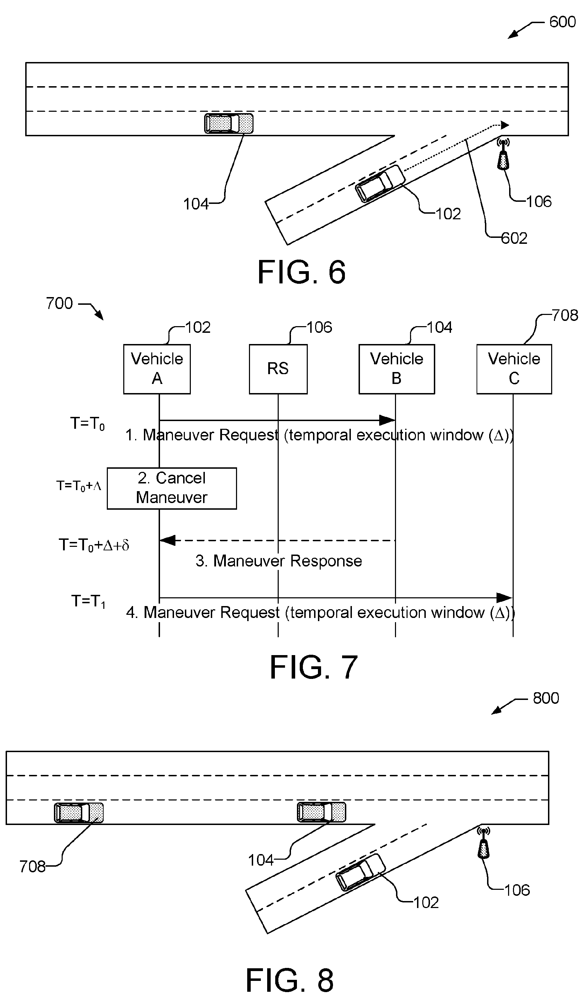

**FIG. 6****,** by way of example, is a diagram 600 illustrating the initiation of the lane merge maneuver of vehicle 102 at time T≤ T₀+Δ, after a successful maneuver request-response in an inter-vehicle message exchange as illustrated in FIGs. 5A and 5B. As indicated by arrow 602, the vehicle 102 will perform the lane merge maneuver because the vehicle 104 accepted the maneuver request prior to expiration of the temporal window (Δ).

**FIG. 7** is a signal flow 700 illustrating an example of a failed maneuver request-response in an inter-vehicle message exchange between vehicle 102 and vehicle 104 for the lane merge maneuver illustrated in FIG. 4. In FIG. 7, the maneuver request-response is unsuccessful because the response to the maneuver request is not received within the temporal execution window.

At stage 1 of FIG. 7, which may be the same as stage 1 of FIG. 5A, the vehicle 102 broadcasts a maneuver message, e.g., a maneuver request, that is received by vehicle 104 at time T=T₀. FIG. 4, by way of example, may illustrate the positions of vehicles 102 and 104 at time T=T₀. The maneuver request may be transmitted directly to vehicle 104 or may be transmitted indirectly through RSU 106. The maneuver request includes a temporal execution window (Δ), e.g., a temporal window for the maneuver start time. The temporal window, for example, may be a range of time after the proposed start time that the vehicle 102 may safely execute the maneuver. In another implementation, the temporal window may be a range of time before or after the proposed start time that the vehicle may safely execute the maneuver. The maneuver request may also indicate a temporal window for the maneuver stop time. The maneuver request of stage 1 may be transmitted directly to vehicle 104 or may be transmitted indirectly through RSU 106. For example, the maneuver request may be transmitted from the vehicle 102 to the RSU 106 and the RSU 106 may transmit the maneuver request to the vehicle 104. The maneuver request may also or alternatively include a spatial window defining a range of distance for one of a start location or stop location or both for the driving maneuver.

At stage 2, as discussed above, the vehicle 102 waits for the maneuver response accepting the maneuver request before executing the lane merge maneuver. The vehicle 102 cancels the lane merge maneuver at time T= T₀+Δ, because vehicle 102 did not receive a maneuver response from vehicle 104 within the temporal execution window (Δ). In some implementations, where vehicle 104 rejects the maneuver request prior to expiration of the temporal execution window (Δ), the vehicle 102 will likewise cancel the lane merge maneuver.

At stage 3, the vehicle 104 may possibly transmit a maneuver response that is received by the vehicle 102 after the temporal execution window (Δ), e.g., at time T=T₀+Δ+δ. Vehicle 102 will ignore the maneuver response received at stage 3 because the temporal execution window (Δ) has already passed and the maneuver was cancelled at stage 3. The maneuver response of stage 3 may be transmitted directly to vehicle 102 or may be transmitted indirectly through RSU 106. For example, the maneuver response may be transmitted from the vehicle 104 to the RSU 106 and the RSU 106 may transmit the maneuver response to the vehicle 102.

At stage 4, the vehicle 102 may re-initiate the lane merge maneuver at time T=T₁, by broadcasting another maneuver message, e.g., a maneuver request, that is received by vehicle 708. Similar to the maneuver request broadcast at stage 1, the maneuver request broadcast at stage 4 includes a temporal execution window (Δ), e.g., a temporal window for the maneuver start time. The maneuver request of stage 4 may be transmitted directly to vehicle 104 or may be transmitted indirectly through RSU 106. For example, the maneuver request may be transmitted from the vehicle 102 to the RSU 106 and the RSU 106 may transmit the maneuver request to the vehicle 104. The maneuver request may also or alternatively include a spatial window defining a range of distance for one of a start location or stop location or both for the driving maneuver.

The vehicle 102 continues with the inter-vehicle message exchange until the lane merge maneuver is successfully completed.

**FIG. 8****,** by way of example, is a diagram 800 illustrating the cancellation of the lane merge maneuver of vehicle 102 at time T=T₁, after a failed maneuver request-response in an inter-vehicle message exchange as illustrated in FIG. 7. In FIG. 8, the vehicle 102 has cancelled the initial lane merge maneuver request (e.g., at stage 2 of FIG. 7) and may initiate a new lane merge maneuver request with vehicle 708.

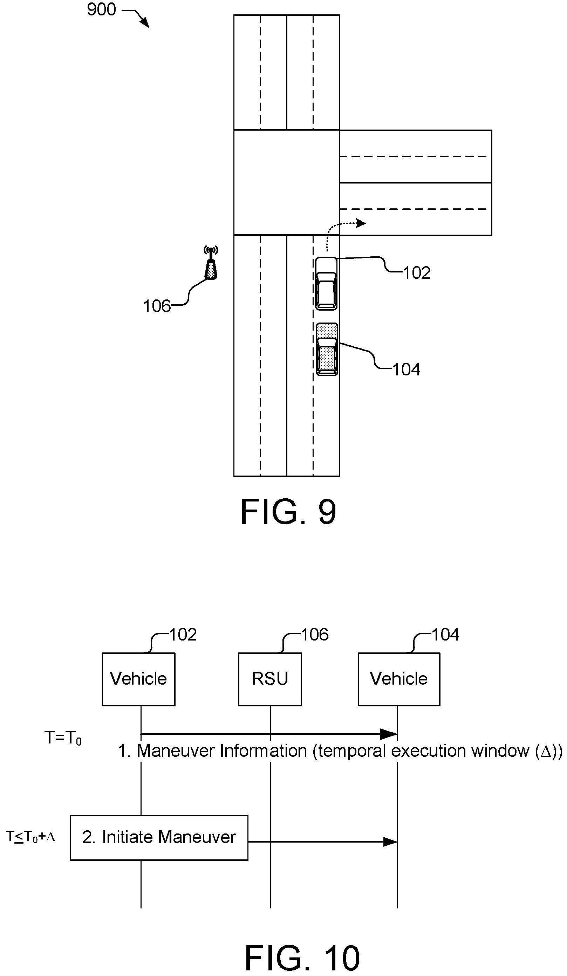

**FIG. 9** is a diagram 900 illustrating an intended right turn maneuver to be executed by vehicle 102, as indicated by arrow 902. The right turn maneuver does not require the cooperation of other vehicles, such as vehicle 104. Accordingly, vehicle 102 may broadcast a maneuver message simply informing other vehicles that it will perform a right turn, along with the temporal window for the maneuver, but does not broadcast a maneuver request to negotiate a cooperative maneuverer.

**FIG. 10** is a signal flow 1000 illustrating an example of an inter-vehicle message exchange between vehicle 102 and vehicle 104 that includes information about an intended maneuver for the right turn maneuver illustrated in FIG. 9.

At stage 1 of FIG. 10, the vehicle 102 broadcasts a maneuver message, e.g., providing maneuver information for the right turn, that is received by vehicle 104 at time T=T₀. FIG. 9, by way of example, may illustrate the positions of vehicles 102 and 104 at time T=T₀. The maneuver information may be transmitted directly to vehicle 104 or may be transmitted indirectly through RSU 106. The maneuver information includes a temporal execution window (Δ), e.g., a temporal window for the maneuver start time. The temporal window, for example, may be a range of time after the proposed start time that the vehicle 102 may safely execute the maneuver. In another implementation, the temporal window may be a range of time before or after the proposed start time that the vehicle may safely execute the maneuver. The maneuver request may also indicate a temporal window for the maneuver stop time. The maneuver request of stage 1 may be transmitted directly to vehicle 104 or may be transmitted indirectly through RSU 106. For example, the maneuver request may be transmitted from the vehicle 102 to the RSU 106 and the RSU 106 may transmit the maneuver request to the vehicle 104.

At stage 2, the vehicle 102 initiates the right turn maneuver at time T≤ T₀+Δ. Vehicle 102 does not require a maneuver response from vehicle 104 because right turn is not a cooperative maneuver. The vehicle 102 may provide a message informing vehicle 104 of the precise maneuver initiation time.

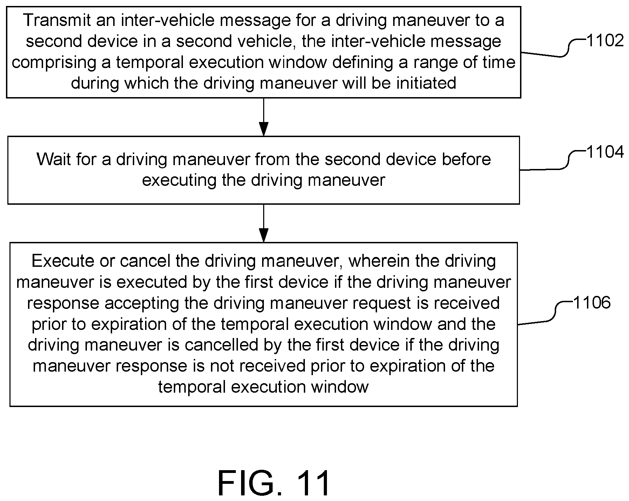

**FIG. 11** is a flow chart illustrating a method of performing information exchange for maneuver execution by performed a first device in a first vehicle, such as a UE in vehicle 102. As illustrated in block 1102, an inter-vehicle message with a driving maneuver request for a driving maneuver is transmitted to a second device in a second vehicle, the inter-vehicle message comprising a temporal execution window defining a range of time during which the driving maneuver will be initiated, e.g., as discussed at stage 1 in FIGs. 5A and 7. At block 1104, the first device waits for a driving maneuver response from the second device before executing the driving maneuver, e.g., as discussed at stage 2 in FIG. 5A. At block 1106, the first device executes or cancels the driving maneuver, wherein the driving maneuver is executed by the first device if the driving maneuver response accepting the driving maneuver request is received prior to expiration of the temporal execution window and the driving maneuver is cancelled by the first device if the driving maneuver response is not received prior to expiration of the temporal execution window, e.g., as discussed at stage 3 in FIG. 5A and stage 2 in FIG. 7.

In one implementation, the inter-vehicle message further comprises a second range of time during which the driving maneuver will be completed.

In one implementation, the driving maneuver is cancelled by the first device if the driving maneuver response rejecting the driving maneuver is received prior to expiration of the temporal execution window, e.g., as discussed at stage 2 in FIG. 7.

In one implementation, the driving maneuver may be cancelled by the first device, and the first device may transmit a second inter-vehicle message with the driving maneuver request to a third device, the second inter-vehicle message comprising a second temporal execution window defining second range of time during which the driving maneuver will be initiated, e.g., as discussed at stage 4 in FIG. 7.

In one implementation, the first device may transmit the inter-vehicle message with the driving maneuver request to the second device directly.

In one implementation, the first device may transmit the inter-vehicle message with the driving maneuver request to the second device via a road side unit.

In one implementation, the inter-vehicle message comprises an initial time and the temporal execution window defining the range of time after the initial time during which the driving maneuver will be initiated.

In one implementation, the inter-vehicle message comprises an initial time and the temporal execution window defining the range of time before or after the initial time during which the driving maneuver will be initiated.

In one implementation, the first device may transmit a second inter-vehicle message for a second driving maneuver to a third device in a third vehicle, the inter-vehicle message comprising a second temporal execution window defining a second range of time during which the second driving maneuver will be initiated, e.g., as discussed at stage 1 in FIG. 10. The first device may executes the second driving maneuver within the temporal execution window, e.g., as discussed at stage 2 of FIG. 10. For example, the second inter-vehicle message may comprise information for the second driving maneuver and the first vehicle may execute the second driving maneuver without waiting for a response from the third device in the third vehicle.

In one implementation, the first device may transmit a second inter-vehicle message with a second driving maneuver request for a second driving maneuver to a third device in a third vehicle, the second inter-vehicle message comprising a spatial window defining a range of distance for one of a start location or stop location or both for the second driving maneuver.

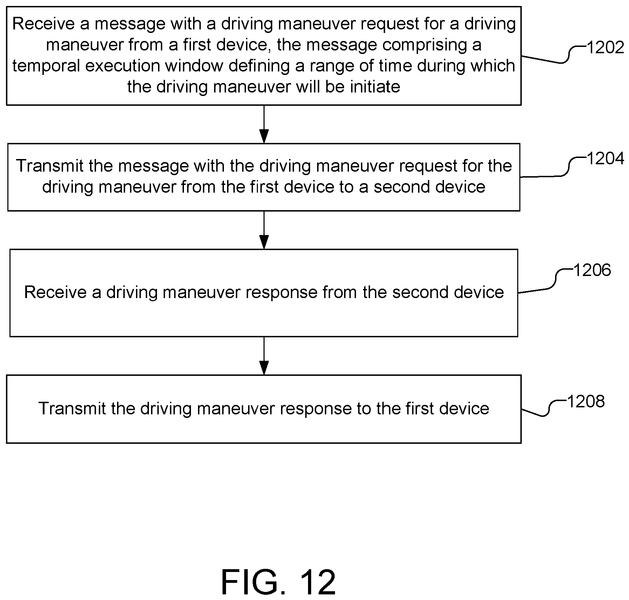

**FIG. 12** is a flow chart illustrating a method of performing information exchange for maneuver execution performed by a road side unit, such as RSU 106. As illustrated in block 1202, receiving a message with a driving maneuver request for a driving maneuver from a first device, the message comprising a temporal execution window defining a range of time during which the driving maneuver will be initiated, e.g., as discussed at stage 1 in FIG. 5A. In block 1204, the message with the driving maneuver request for the driving maneuver from the first device is transmitted to a second device, e.g., as discussed at stage 1 in FIG. 5A. In block 1206, a driving maneuver response is received from the second device, e.g., as discussed at stage 2 in FIG. 5A. In block 1208, the driving maneuver response is transmitted to the first device, e.g., as discussed at stage 2 in FIG. 5A.

In one implementation, the message further comprises a second range of time during which the driving maneuver will be completed.

In one implementation, the driving maneuver is executed by the first device if the driving maneuver response accepting the driving maneuver request is received prior to expiration of the temporal execution window and the driving maneuver is cancelled by the first device if the driving maneuver response is not received prior to expiration of the temporal execution window, e.g., as discussed at stage 3 of FIG. 5A and stage 2 of FIG. 7.

In one implementation, the driving maneuver is cancelled by the first device if the driving maneuver response rejecting the driving maneuver is received prior to expiration of the temporal execution window, e.g., as discussed at stage 2 of FIG. 7.

In one implementation, the driving maneuver may be cancelled by the first device, and the RSU may receive a second message with the driving maneuver request for the driving maneuver from the first device, the second message comprising a second temporal execution window defining second range of time during which the driving maneuver will be initiated, e.g., as discussed at stage 4 of FIG. 7. The second message with the driving maneuver request from the first device is transmitted to a third device, e.g., as discussed at stage 4 of FIG. 7.

In one implementation, the message comprises an initial time and the temporal execution window defining the range of time after the initial time during which driving maneuver will be initiated.

In one implementation, the message comprises an initial time and the temporal execution window defining the range of time before or after the initial time during which driving maneuver will be initiated.

In one implementation, the RSU may receive a second message for a second driving maneuver from the first device, the second message comprising a second temporal execution window defining a second range of time during which the second driving maneuver will be initiated, wherein the first device executes the driving maneuver within the temporal execution window, e.g., as discussed at stage 1 of FIG. 10. The second message for the second driving maneuver is transmitted to a third device in a third vehicle, e.g., as discussed at stage 1 of FIG. 10. The second message may comprise information for the second driving maneuver and the first vehicle may initiate the second driving maneuver without waiting for a response from the third device in the third vehicle.

In one implementation, the RSU may receive a second message for a second driving maneuver request for a second driving maneuver from the first device, the second message comprising a spatial window defining a range of distance for one of a start location or stop location or both for the second driving maneuver. The second message with the second driving maneuver request for the second driving maneuver is transmitted to a third device in a third vehicle.

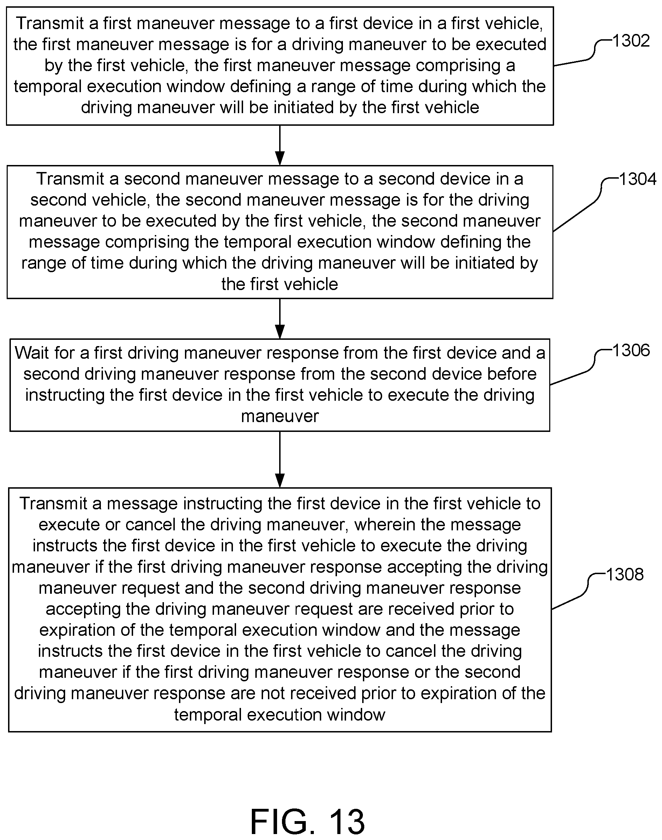

**FIG. 13** is a flow chart illustrating a method of performing information exchange for maneuver execution initiated by a road side unit, such as RSU 106. As illustrated in block 1302, a first maneuver message is transmitted to a first device in a first vehicle, the first maneuver message is for a driving maneuver to be executed by the first vehicle, the first maneuver message comprising a temporal execution window defining a range of time during which the driving maneuver will be initiated by the first vehicle, e.g., as discussed at stage 1 in FIG. 5B. In block 1304, a second maneuver message is transmitted to a second device in a second vehicle, the second maneuver message is for the driving maneuver to be executed by the first vehicle, the second maneuver message comprising the temporal execution window defining the range of time during which the driving maneuver will be initiated by the first vehicle, e.g., as discussed at stage 1 in FIG. 5B. In block 1306, the RSU waits for a first driving maneuver response from the first device and a second driving maneuver response from the second device before instructing the first device in the first vehicle to execute the driving maneuver, e.g., as discussed at stage 2 in FIG. 5B. At stage 1308, a message is transmitted instructing the first device in the first vehicle to execute or cancel the driving maneuver, wherein the message instructs the first device in the first vehicle to execute the driving maneuver if the first driving maneuver response accepting the driving maneuver request and the second driving maneuver response accepting the driving maneuver request are received prior to expiration of the temporal execution window and the message instructs the first device in the first vehicle to cancel the driving maneuver if the first driving maneuver response or the second driving maneuver response are not received prior to expiration of the temporal execution window, e.g., as discussed at stage 4 in FIG. 5B.

In one implementation, the first maneuver message and the second maneuver message may further comprise a second range of time during which the driving maneuver will be completed.

In one implementation, the driving maneuver is cancelled if the first driving maneuver response or the first driving maneuver response rejecting the driving maneuver is received prior to expiration of the temporal execution window.

In one implementation, the driving maneuver may be cancelled, and the RSU transmits a third maneuver message to the first device in the first vehicle, the third maneuver message is for the driving maneuver to be executed by the first vehicle, the third maneuver message comprising a second temporal execution window defining a range of time during which the driving maneuver will be initiated by the first vehicle, and transmits a fourth maneuver message to a third device in a third vehicle, the fourth maneuver message is for the driving maneuver to be executed by the first vehicle, the fourth maneuver message comprising the second temporal execution window defining the range of time during which the driving maneuver will be initiated by the first vehicle.

In one implementation, the first maneuver message and the second maneuver message comprises an initial time and the temporal execution window defining the range of time after the initial time during which driving maneuver will be initiated.

In one implementation, the first maneuver message and the second maneuver message comprises an initial time and the temporal execution window defining the range of time before or after the initial time during which driving maneuver will be initiated.

In one implementation, the RSU may transmit a third maneuver message to third device in a third vehicle, the third maneuver message is for a second driving maneuver to be executed by the third vehicle, the second maneuver message comprising a second temporal execution window defining a second range of time during which the second driving maneuver will be initiated by the third vehicle. The RSU may transmit a fourth maneuver message to a fourth device in a fourth vehicle, the fourth maneuver message is for the second driving maneuver to be executed by the third vehicle, the fourth maneuver message comprising the second temporal execution window defining the second range of time during which the driving maneuver will be initiated by the third vehicle. The RSU may transmit a second message instructing the third device in the third vehicle to execute the second maneuver within the second temporal execution window. For example, the fourth maneuver message may comprise information for the second driving maneuver, and the RSU may transmit the second message without waiting for a response from the fourth device.

In one implementation, the RSU may transmit a third maneuver message to third device in a third vehicle, the third maneuver message is for a second driving maneuver to be executed by the third vehicle, the second maneuver message comprising a spatial window defining a range of distance for one of a start location or stop location or both for the second driving maneuver. The RSU may transmit a fourth maneuver message to a fourth device in a fourth vehicle, the fourth maneuver message is for the second driving maneuver to be executed by the third vehicle, the fourth maneuver message comprising the spatial window defining the range of distance for one of the start location or stop location or both for the second driving maneuver.

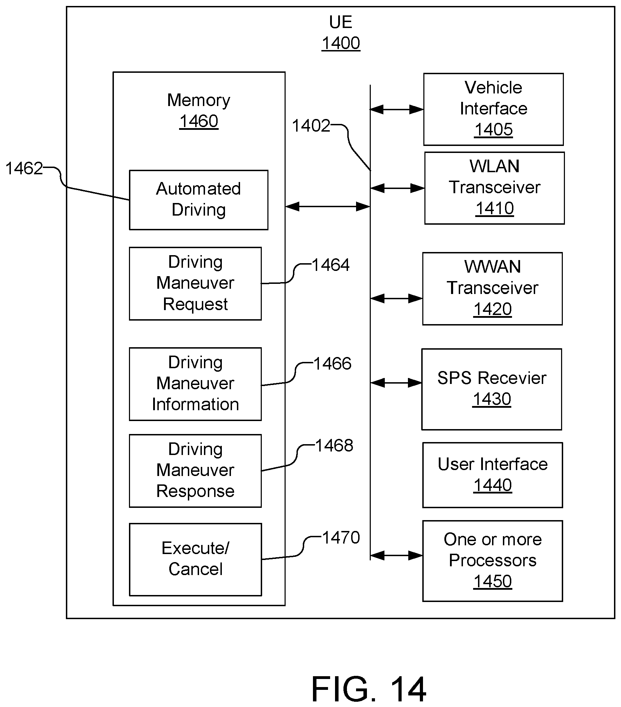

**FIG. 14** is a diagram illustrating an example of a hardware implementation of a user equipment (UE) 1400 for a vehicle capable of performing information exchange for maneuver execution by the vehicle. The UE 1400, for example, may be control the automated driving of vehicle 102, shown in FIGs. 1-10. The UE 1400, for example, may include a vehicle interface 1405 with which commands are provided to the vehicle for automated driving and sensory input may be provided from the vehicle. The UE 1400 includes a Wireless Wide Area Network (WWAN) transceiver 1420, including a transmitter and receiver, such as a cellular transceiver, configured to broadcast and receive inter-vehicle communications in the wireless network. The WWAN transceiver 1420 may also be configured to wirelessly communicate directly with UEs in other vehicles or infrastructure entities, such as road side units, e.g., using wireless communications under IEEE 802.11p or other appropriate short range wireless communications. The UE 1400 may further include a Wireless Local Area Network (WLAN) transceiver 1410, including a transmitter and receiver, which may also be used to wirelessly communicate directly with other entities in the wireless network. The UE 1400 may further include an SPS receiver 1430 with which SPS signals from SPS satellites, e.g., GPS or GNSS, may be received. The UE 1400 may include additional features, such as user interface 1440 that may include e.g., a display, a keypad or other input device, such as virtual keypad on the display, through which the user may interface with the UE 1400.

The UE 1400 further includes one or more processors 1450 and memory 1460, which may be coupled together with bus 1402. The one or more processors 1450 and other components of the UE 1400 may similarly be coupled together with bus 1402, a separate bus, or may be directly connected together or coupled using a combination of the foregoing. The memory 1460 may contain executable code or software instructions that when executed by the one or more processors 1450 cause the one or more processors 1450 to operate as a special purpose computer programmed to perform the techniques disclosed herein. As illustrated in FIG. 14, the memory 1460 may include one or more components or modules that may be implemented by the one or more processors 1450 to perform the methodologies described herein. While the components or modules are illustrated as software in memory 1460 that is executable by the one or more processors 1450, it should be understood that the components or modules may be dedicated hardware either in the one or more processors 1450 or off the processors.

The memory 1460 may include an automated driving module 1462 that when implemented by the one or more processors 1450 configures the one or more processors 1450 to determine and perform various driving maneuvers via the vehicle interface 1405. The automated driving module 1462, for example, may determine maneuver start and stop time, start and stop location, and in some cases maneuver trajectory, as well as temporal windows for the start and stop times and in some implementations, a spatial window for the start and stop locations.

Memory 1460 may further include a driving maneuver request module 1464 that when implemented by the one or more processors 1450 configures the one or more processors 1450 to generate and to cause the WWAN transceiver 1420 (or WLAN transceiver 1410) to transmit an inter-vehicle message for a driving maneuver request to another vehicle or road side unit, where the inter-vehicle message includes a temporal execution window defining a range of time during which the driving maneuver will be initiated and may include a second temporal window defining a second range of time during which the driving maneuver will be completed, e.g., as described at stage 1 in FIGs. 5A and 7 and in block 1102 of FIG. 11. The inter-vehicle message may additionally or alternatively include a spatial window defining a range of distance for a stop and/or stop location for a driving maneuver.

Memory 1460 may further include a driving maneuver information module 1466 that when implemented by the one or more processors 1450 configures the one or more processors 1450 to generate and to cause the WWAN transceiver 1420 (or WLAN transceiver 1410) to transmit an inter-vehicle message with information about a driving maneuver that will be executed. The inter-vehicle message being sent to another vehicle or road side unit and includes a temporal execution window defining a range of time during which the driving maneuver will be initiated and may include a second temporal window defining a second range of time during which the driving maneuver will be completed, e.g., as described at stage 1 in FIG. 10 and in block 1102 of FIG. 11. The inter-vehicle message may additionally or alternatively include a spatial window defining a range of distance for a stop and/or stop location for a driving maneuver.

Memory 1460 may further include a driving maneuver response module 1468 that when implemented by the one or more processors 1450 configures the one or more processors 1450 to enable the WWAN transceiver 1420 (or WLAN transceiver 1410) to receive a driving maneuver response from another vehicle or road side unit, e.g., as described at stage 2 in FIGs. 5A and 7 and in block 1104 of FIG. 11.

Memory 1460 may further include an execute/cancel module 1470 that when implemented by the one or more processors 1450 configures the one or more processors 1450 to wait for a driving maneuver response from another vehicle or road side unit before executing or cancelling the driving maneuver, e.g., as described at stage 3 in FIG. 5A and stage 2 in FIG. 7 and stage 2 in FIG. 10 and in block 1106 of FIG. 11. For example, the one or more processors 1450 may be configured to cause the driving maneuver to be executed, e.g., via vehicle interface 1405, if a driving maneuver response accepting the driving maneuver request is received prior to expiration of the temporal execution window. The one or more processors 1450 may be configured to cause the driving maneuver to be cancelled if the driving maneuver response is not received prior to expiration of the temporal execution window. Once the driving maneuver is cancelled, the one or more processors 1450 may be configured to generate a new driving maneuver and to generate and transmit a new driving maneuver request or driving maneuver information using modules 1462, 1464, and 1466.

The methodologies described herein may be implemented by various means depending upon the application. For example, these methodologies may be implemented in hardware, firmware, software, or any combination thereof. For a hardware implementation, the one or more processors 1450 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For an implementation of UE 1400 involving firmware and/or software, the methodologies may be implemented with modules (e.g., procedures, functions, and so on) that perform the separate functions described herein. Any machine-readable medium tangibly embodying instructions may be used in implementing the methodologies described herein. For example, software codes may be stored in a memory (e.g. memory 1460) and executed by one or more processors 1450, causing the one or more processors 1450 to operate as a special purpose computer programmed to perform the techniques disclosed herein. Memory may be implemented within the one or processors 1450 or external to the one or more processors 1450. As used herein the term "memory" refers to any type of long term, short term, volatile, nonvolatile, or other memory and is not to be limited to any particular type of memory or number of memories, or type of media upon which memory is stored.

If implemented in firmware and/or software, the functions performed by UE 1400 may be stored as one or more instructions or code on a non-transitory computer-readable storage medium such as memory 1460. Examples of storage media include computer-readable media encoded with a data structure and computer-readable media encoded with a computer program. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage, semiconductor storage, or other storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

In addition to storage on computer-readable storage medium, instructions and/or data for UE 1400 may be provided as signals on transmission media included in a communication apparatus. For example, a communication apparatus comprising part or all of UE 1400 may include a transceiver having signals indicative of instructions and data. The instructions and data are stored on non-transitory computer readable media, e.g., memory 1460, and are configured to cause the one or more processors 1450 to operate as a special purpose computer programmed to perform the techniques disclosed herein. That is, the communication apparatus includes transmission media with signals indicative of information to perform disclosed functions. At a first time, the transmission media included in the communication apparatus may include a first portion of the information to perform the disclosed functions, while at a second time the transmission media included in the communication apparatus may include a second portion of the information to perform the disclosed functions.

Thus, a user equipment, such as UE 1400, may include a means for transmitting an inter-vehicle message for a driving maneuver to a second device in a second vehicle, the inter-vehicle message comprising a temporal execution window defining a range of time during which the driving maneuver will be initiated, which may be, e.g., the WWAN transceiver 1420 or WLAN transceiver 1410 and one or more processors 1450 with dedicated hardware or implementing executable code or software instructions in memory 1460 such as the driving maneuver request module 1464. A means for waiting for a driving maneuver response from the second device before executing the driving maneuver may be, e.g., the WWAN transceiver 1420 or WLAN transceiver 1410 and one or more processors 1450 with dedicated hardware or implementing executable code or software instructions in memory 1460 such as the driving maneuver response module 1468 and execute/cancel module 1470. A means for executing or cancelling the driving maneuver, wherein the driving maneuver is executed by the first device if the driving maneuver response accepting the driving maneuver request is received prior to expiration of the temporal execution window and the driving maneuver is cancelled by the first device if the driving maneuver response is not received prior to expiration of the temporal execution window may be, e.g., the vehicle interface 1405 and one or more processors 1450 with dedicated hardware or implementing executable code or software instructions in memory 1460 such as the execute/cancel module 1470.

The UE 1400 may further include a means for transmitting a second inter-vehicle message with the driving maneuver request to a third device, the second inter-vehicle message comprising a second temporal execution window defining second range of time during which the driving maneuver will be initiated, which may be e.g., the WWAN transceiver 1420 or WLAN transceiver 1410 and one or more processors 1450 with dedicated hardware or implementing executable code or software instructions in memory 1460 such as the execute/cancel module 1470 and driving maneuver request module 1464.

The UE 1400 may further include a means for transmitting a second inter-vehicle message for a second driving maneuver to a third device in a third vehicle, the inter-vehicle message comprising a temporal execution window defining a range of time during which the second driving maneuver will be initiated, which may be, e.g., the WWAN transceiver 1420 or WLAN transceiver 1410 and one or more processors 1450 with dedicated hardware or implementing executable code or software instructions in memory 1460 such as the driving maneuver information module 1466. A means for executing the second driving maneuver within the temporal execution window may be, e.g., the vehicle interface 1405 and one or more processors 1450 with dedicated hardware or implementing executable code or software instructions in memory 1460 such as the execute/cancel module 1470.

The UE 1400 may further include a means for transmitting a second inter-vehicle message for a second driving maneuver to a third device in a third vehicle, the second inter-vehicle message comprising a spatial window defining a range of distance for one of a start location or stop location or both for the second driving maneuver, which may be, e.g., the WWAN transceiver 1420 or WLAN transceiver 1410 and one or more processors 1450 with dedicated hardware or implementing executable code or software instructions in memory 1460 such as the driving maneuver request module 1464 or the driving maneuver information module 1466.

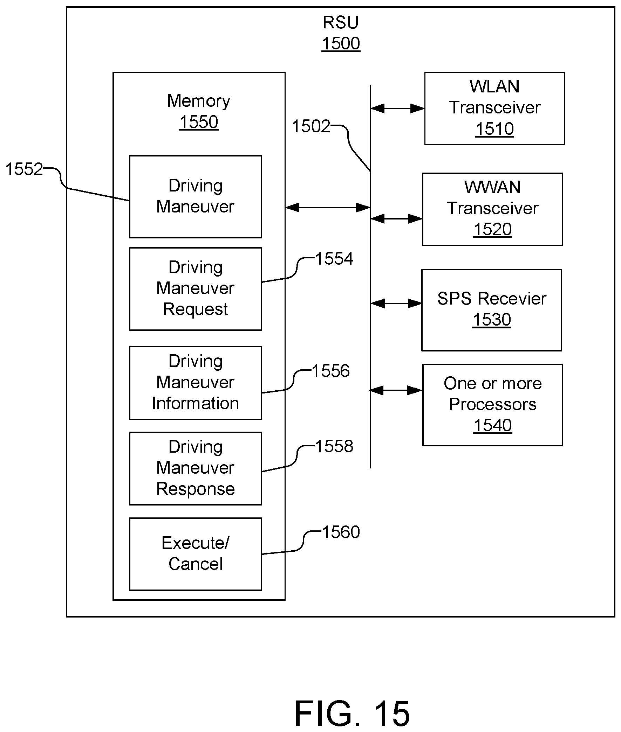

**FIG. 15** **is** a diagram illustrating an example of a hardware implementation of a road side unit (RSU) 1500 capable of performing information exchange for maneuver execution by a vehicle. The RSU 1500 includes a Wireless Wide Area Network (WWAN) transceiver 1520, including a transmitter and receiver, such as a cellular transceiver, configured to wirelessly communicate directly with other entities, such as UEs in vehicles, e.g., using wireless communications under IEEE 802.11p or other appropriate short range wireless communications. The RSU 1500 may further include a Wireless Local Area Network (WLAN) transceiver 1510, including a transmitter and receiver, which may also be used to wirelessly communicate directly with other entities, such as UEs in vehicles. The RSU 1500 may further include other components, such as an SPS receiver 1530 with which SPS signals from SPS satellites may be received for positioning.

The RSU 1500 further includes one or more processors 1540 and memory 1550, which may be coupled together with bus 1502. The one or more processors 1540 and other components of the RSU 1500 may similarly be coupled together with bus 1502, a separate bus, or may be directly connected together or coupled using a combination of the foregoing. The memory 1550 may contain executable code or software instructions that when executed by the one or more processors 1540 cause the one or more processors 1540 to operate as a special purpose computer programmed to perform the techniques disclosed herein. As illustrated in FIG. 15, the memory 1550 may include one or more components or modules that may be implemented by the one or more processors 1540 to perform the methodologies described herein. While the components or modules are illustrated as software in memory 1550 that is executable by the one or more processors 1540, it should be understood that the components or modules may be dedicated hardware either in the one or more processors 1540 or off the processors.

The memory 1550 may include a driving maneuver module 1552 that when implemented by the one or more processors 1540 configures the one or more processors 1540 to determine and various driving maneuvers for vehicles in communication with the RSU 1500. The driving maneuver module 1552, for example, may determine maneuver start and stop time, start and stop location, and in some cases maneuver trajectory, as well as temporal windows for the start and stop times and in some implementations, a spatial window for the start and stop locations.

The memory 1550 may include a driving maneuver request module 1554 that when implemented by the one or more processors 1540 configures the one or more processors 1540 to cause the WWAN transceiver 1520 (or WLAN transceiver 1510) to receive an inter-vehicle message with a driving maneuver request from a device (e.g., vehicle 102), the inter-vehicle message comprising a temporal execution window defining a range of time during which the driving maneuver will be initiated, and to transmit the inter-vehicle message with the driving maneuver request from the device to a different device (e.g., vehicle 104), e.g., as described at stage 1 in FIGs. 5A and 7 and in blocks 1202 and 1204 of FIG. 12. The inter-vehicle message may additionally or alternatively include a spatial window defining a range of distance for a stop and/or stop location for a driving maneuver. The one or more processors 1540 may also be configured to generate a driving maneuver request for a driving maneuver generated by the RSU 1500, e.g., with the driving maneuver module 1552, and to cause the WWAN transceiver 1520 (or WLAN transceiver 1510) to transmit an inter-vehicle message with the driving maneuver request to an executing device (e.g., vehicle 102) and a responding device (e.g., vehicle 104), e.g., as described at stage 1 in FIG. 5B.

Memory 1550 may further include a driving maneuver information module 1556 that when implemented by the one or more processors 1540 configures the one or more processors 1540 to cause the WWAN transceiver 1520 (or WLAN transceiver 1510) to receive an inter-vehicle message with information for a driving maneuver from a device (e.g., vehicle 102), the inter-vehicle message comprising a temporal execution window defining a range of time during which the driving maneuver will be initiated, wherein the device executes the driving maneuver within the temporal execution window; and to transmit the inter-vehicle message with information for the driving maneuver from the device to a different device (e.g., vehicle 104), e.g., as described at stage 1 in FIG. 10. The one or more processors 1540 may also be configured to generate driving maneuver information for a driving maneuver generated by the RSU 1500, e.g., with the driving maneuver module 1552, and to cause the WWAN transceiver 1520 (or WLAN transceiver 1510) to transmit an inter-vehicle message with the driving maneuver information to an executing device (e.g., vehicle 102) and secondary devices (e.g., vehicle 104).

Memory 1550 may further include a driving maneuver response module 1556 that when implemented by the one or more processors 1540 configures the one or more processors 1540 to cause the WWAN transceiver 1520 (or WLAN transceiver 1510) to receive a driving maneuver response from the device (e.g., vehicle 104) and to transmit the driving maneuver response to a requesting device (e.g., vehicle 102), e.g., as described at stage 2 in FIG. 5A and stage 3 in FIG. 7 and in blocks 1204 and 1206 of FIG. 12. The one or more processors 1540 may also be configured to cause the WWAN transceiver 1520 (or WLAN transceiver 1510) to receive a driving maneuver response from an executing device (e.g., vehicle 102) and a responding device (e.g., vehicle 104), e.g., as described at stages 2 and 3 in FIG. 5B.

Memory 1550 may further include an execute/cancel module 1560 that when implemented by the one or more processors 1540 configures the one or more processors 1540 to wait for a driving maneuver response from the executing device (e.g., vehicle 102) and the responding device (e.g., vehicle 104) before instructing the executing device to execute or cancel the driving maneuver, e.g., as described at stage 4 in FIG. 5B. For example, the one or more processors 1540 may be configured to cause the WWAN transceiver 1520 (or WLAN transceiver 1510) to transmit an driving maneuver execute instruction to the executing device (e.g., vehicle 102) if a driving maneuver response accepting the driving maneuver request is received from the executing device the executing device (e.g., vehicle 102) and the responding device (e.g., vehicle 104) prior to expiration of the temporal execution window. The one or more processors 1540 may be configured to cancel the driving maneuver or to transmit a driving maneuver cancel instruction to the executing device (e.g., vehicle 102) if the driving maneuver response is not received from both the executing device (e.g., vehicle 102) and the responding device (e.g., vehicle 104) prior to expiration of the temporal execution window. Once the driving maneuver is cancelled, the one or more processors 1540 may be configured to generate a new driving maneuver and to generate and transmit a new driving maneuver request or driving maneuver information using modules 1552, 1554, and 1556.

The methodologies described herein may be implemented by various means depending upon the application. For example, these methodologies may be implemented in hardware, firmware, software, or any combination thereof. For a hardware implementation, the one or more processors 1540 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For an implementation of RSU 1500 involving firmware and/or software, the methodologies may be implemented with modules (e.g., procedures, functions, and so on) that perform the separate functions described herein. Any machine-readable medium tangibly embodying instructions may be used in implementing the methodologies described herein. For example, software codes may be stored in a memory (e.g. memory 1550) and executed by one or more processors 1540, causing the one or more processors 1540 to operate as a special purpose computer programmed to perform the techniques disclosed herein. Memory may be implemented within the one or processors 1540 or external to the one or more processors 1540. As used herein the term "memory" refers to any type of long term, short term, volatile, nonvolatile, or other memory and is not to be limited to any particular type of memory or number of memories, or type of media upon which memory is stored.

If implemented in firmware and/or software, the functions performed by RSU 1400 may be stored as one or more instructions or code on a non-transitory computer-readable storage medium such as memory 1450. Examples of storage media include computer-readable media encoded with a data structure and computer-readable media encoded with a computer program. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage, semiconductor storage, or other storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

In addition to storage on computer-readable storage medium, instructions and/or data for RSU 1400 may be provided as signals on transmission media included in a communication apparatus. For example, a communication apparatus comprising part or all of RSU 1400 may include a transceiver having signals indicative of instructions and data. The instructions and data are stored on non-transitory computer readable media, e.g., memory 1450, and are configured to cause the one or more processors 1440 to operate as a special purpose computer programmed to perform the techniques disclosed herein. That is, the communication apparatus includes transmission media with signals indicative of information to perform disclosed functions. At a first time, the transmission media included in the communication apparatus may include a first portion of the information to perform the disclosed functions, while at a second time the transmission media included in the communication apparatus may include a second portion of the information to perform the disclosed functions.

Thus, a RSU, such as RSU 1400, may include a means for receiving an inter-vehicle message with a driving maneuver request from a first device, the inter-vehicle message comprising a temporal execution window defining a range of time during which the driving maneuver will be initiated, which may be, e.g., the WWAN transceiver 1420 or WLAN transceiver 1410 and one or more processors 1440 with dedicated hardware or implementing executable code or software instructions in memory 1360 such as the driving maneuver request module 1454. A means for transmitting the inter-vehicle message with the driving maneuver request from the first device to a second device may be, e.g., the WWAN transceiver 1420 or WLAN transceiver 1410 and one or more processors 1440 with dedicated hardware or implementing executable code or software instructions in memory 1360 such as the driving maneuver request module 1454. A mean for receiving a driving maneuver response from the second device may be, e.g., the WWAN transceiver 1420 or WLAN transceiver 1410 and one or more processors 1440 with dedicated hardware or implementing executable code or software instructions in memory 1360 such as the driving maneuver response module 1458. A means for transmitting the driving maneuver response to the first device may be, e.g., the WWAN transceiver 1420 or WLAN transceiver 1410 and one or more processors 1440 with dedicated hardware or implementing executable code or software instructions in memory 1360 such as the driving maneuver response module 1458.

The RSU 1400 may include a means for receiving a second inter-vehicle message with the driving maneuver request from the first device, the second inter-vehicle message comprising a second temporal execution window defining second range of time during which the driving maneuver will be initiated, which may be, e.g., the WWAN transceiver 1420 or WLAN transceiver 1410 and one or more processors 1440 with dedicated hardware or implementing executable code or software instructions in memory 1360 such as the driving maneuver request module 1454. A means for transmitting the second inter-vehicle message with the driving maneuver request from the first device to a third device may be, e.g., the WWAN transceiver 1420 or WLAN transceiver 1410 and one or more processors 1440 with dedicated hardware or implementing executable code or software instructions in memory 1360 such as the driving maneuver request module 1454.

The RSU 1400 may include a means for receiving a second inter-vehicle message for a second driving maneuver from the first device, the second inter-vehicle message comprising a temporal execution window defining a range of time during which the second driving maneuver will be initiated, wherein the first device executes the driving maneuver within the temporal execution window may be, e.g., the WWAN transceiver 1420 or WLAN transceiver 1410 and one or more processors 1440 with dedicated hardware or implementing executable code or software instructions in memory 1360 such as the driving maneuver information module 1456. A means for transmitting the second inter-vehicle message for the second driving maneuver to a third device in a third vehicle may be, e.g., the WWAN transceiver 1420 or WLAN transceiver 1410 and one or more processors 1440 with dedicated hardware or implementing executable code or software instructions in memory 1360 such as the driving maneuver information module 1456.

The RSU 1400 may include a means for receiving a second inter-vehicle message for a second driving maneuver from the first device, the second inter-vehicle message comprising a spatial window defining a range of distance for one of a start location or stop location or both for the second driving maneuver, which may be, e.g., the WWAN transceiver 1420 or WLAN transceiver 1410 and one or more processors 1440 with dedicated hardware or implementing executable code or software instructions in memory 1360 such as the driving maneuver request module 1454. A means for transmitting the second inter-vehicle message for the second driving maneuver to a third device in a third vehicle may be, e.g., the WWAN transceiver 1420 or WLAN transceiver 1410 and one or more processors 1440 with dedicated hardware or implementing executable code or software instructions in memory 1360 such as the driving maneuver request module 1454.

Reference throughout this specification to "one example", "an example", "certain examples", or "exemplary implementation" means that a particular feature, structure, or characteristic described in connection with the feature and/or example may be included in at least one feature and/or example of claimed subject matter. Thus, the appearances of the phrase "in one example", "an example", "in certain examples" or "in certain implementations" or other like phrases in various places throughout this specification are not necessarily all referring to the same feature, example, and/or limitation. Furthermore, the particular features, structures, or characteristics may be combined in one or more examples and/or features.

Some portions of the detailed description included herein are presented in terms of algorithms or symbolic representations of operations on binary digital signals stored within a memory of a specific apparatus or special purpose computing device or platform. In the context of this particular specification, the term specific apparatus or the like includes a general purpose computer once it is programmed to perform particular operations pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining" or the like refer to actions or processes of a specific apparatus, such as a special purpose computer, special purpose computing apparatus or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter.

The terms, "and", "or", and "and/or" as used herein may include a variety of meanings that also are expected to depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein may be used to describe any feature, structure, or characteristic in the singular or may be used to describe a plurality or some other combination of features, structures or characteristics.

Therefore, it is intended that claimed subject matter not be limited to the particular examples disclosed, but that such claimed subject matter may also include all aspects falling within the scope of appended claims.

## Claims

1. A method of performing information exchange for maneuver execution by a first device in a first vehicle, the method comprising:
transmitting an inter-vehicle message with a driving maneuver request for a driving maneuver to a second device in a second vehicle, the inter-vehicle message comprising a temporal execution window defining a range of time during which the driving maneuver will be initiated (1102);
waiting for a driving maneuver response to the driving maneuver request from the second device before executing the driving maneuver (1104); and
executing or cancelling the driving maneuver, wherein the driving maneuver is executed by the first device if the driving maneuver response accepting the driving maneuver request is received prior to expiration of the temporal execution window and the driving maneuver is cancelled by the first device if the driving maneuver response is not received prior to expiration of the temporal execution window (1106).

2. The method of claim 1, wherein the inter-vehicle message further comprises a second range of time during which the driving maneuver will be completed and/or
wherein the driving maneuver is cancelled by the first device if the driving maneuver response rejecting the driving maneuver is received prior to expiration of the temporal execution window.

3. The method of claim 1, wherein the driving maneuver is cancelled by the first device, the method further comprising transmitting a second inter-vehicle message with the driving maneuver request to a third device, the second inter-vehicle message comprising a second temporal execution window defining second range of time during which the driving maneuver will be initiated.

4. The method of claim 1, wherein transmitting the inter-vehicle message with the driving maneuver request to the second device either comprises transmitting the inter-vehicle message to the second device directly or transmitting the inter-vehicle message to the second device via a road side unit.

5. The method of claim 1, wherein the inter-vehicle message comprises an initial time and the temporal execution window either defining the range of time after the initial time during which the driving maneuver will be initiated or defining the range of time before or after the initial time during which the driving maneuver will be initiated.

6. The method of claim 1, further comprising:
transmitting a second inter-vehicle message for a second driving maneuver to a third device in a third vehicle, the inter-vehicle message comprising a second temporal execution window defining a second range of time during which the second driving maneuver will be initiated; and
executing the second driving maneuver within the second temporal execution window.

7. The method of claim 1, further comprising:
transmitting a second inter-vehicle message with a second driving maneuver request for a second driving maneuver to a third device in a third vehicle, the second inter-vehicle message comprising a spatial window defining a range of distance for one of a start location or stop location or both for the second driving maneuver.

8. A first device in a first vehicle configured to perform information exchange for maneuver execution by the first device in the first vehicle, comprising:
a wireless transceiver configured to communicate with devices in a wireless network;
at least one memory; and
at least one processor coupled to the wireless transceiver and the at least one memory, the at least one processor configured to:
transmit, via the wireless transceiver, an inter-vehicle message with a driving maneuver request for a driving maneuver to a second device in a second vehicle, the inter-vehicle message comprising a temporal execution window defining a range of time during which the driving maneuver will be initiated (1102);
wait, via the wireless transceiver, for a driving maneuver response to the driving maneuver request from the second device before executing the driving maneuver (1104); and
execute or cancel the driving maneuver, wherein the driving maneuver is executed by the first device if the driving maneuver response accepting the driving maneuver request is received prior to expiration of the temporal execution window and the driving maneuver is cancelled by the first device if the driving maneuver response is not received prior to expiration of the temporal execution window (1106).

9. The first device of claim 8, wherein the inter-vehicle message further comprises a second range of time during which the driving maneuver will be completed.

10. The first device of claim 8, wherein the driving maneuver is cancelled by the first device if the driving maneuver response rejecting the driving maneuver is received prior to expiration of the temporal execution window.

11. The first device of claim 8, wherein the at least one processor is configured to transmit, via the wireless transceiver, the inter-vehicle message with the driving maneuver request to the second device by being configured to either transmit the inter-vehicle message to the second device directly or transmit the inter-vehicle message to the second device via a road side unit.

12. The first device of claim 8, wherein the inter-vehicle message comprises an initial time and the temporal execution window either defining the range of time after the initial time during which the driving maneuver will be initiated or defining the range of time before or after the initial time during which the driving maneuver will be initiated.

13. The first device of claim 8, wherein the at least one processor is further configured to:
transmit, via the wireless transceiver, a second inter-vehicle message for a second driving maneuver to a third device in a third vehicle, the inter-vehicle message comprising a second temporal execution window defining a second range of time during which the second driving maneuver will be initiated; and
execute, via the wireless transceiver, the second driving maneuver within the second temporal execution window, and optionally wherein the second inter-vehicle message comprises information for the second driving maneuver.

## Patentansprüche

1. Verfahren zum Durchführen von Informationsaustausch zur Ausführung eines Fahrmanövers durch eine erste Vorrichtung in einem ersten Fahrzeug, wobei das Verfahren Folgendes beinhaltet:
Senden einer Fahrzeug-zu-Fahrzeug-Nachricht mit einer Fahrmanöveranforderung für ein Fahrmanöver zu einer zweiten Vorrichtung in einem zweiten Fahrzeug, wobei die Fahrzeug-zu-Fahrzeug-Nachricht ein zeitliches Ausführungsfenster umfasst, das einen Zeitraum definiert, in dem das Fahrmanöver eingeleitet wird (1102);
Warten auf eine Fahrmanöverantwort auf die Fahrmanöveranforderung von der zweiten Vorrichtung vor der Ausführung des Fahrmanövers (1104); und
Ausführen oder Abbrechen des Fahrmanövers, wobei das Fahrmanöver von der ersten Vorrichtung ausgeführt wird, wenn die die Fahrmanöveranforderung akzeptierende Fahrmanöverantwort vor Ablauf des zeitlichen Ausführungsfensters empfangen wird, und das Fahrmanöver von der ersten Vorrichtung abgebrochen wird, wenn die Fahrmanöverantwort nicht vor Ablauf des zeitlichen Ausführungsfensters empfangen wird (1106).

2. Verfahren nach Anspruch 1, wobei die Fahrzeug-zu-Fahrzeug-Nachricht ferner einen zweiten Zeitraum umfasst, in dem das Fahrmanöver abgeschlossen wird, und/oder
wobei das Fahrmanöver von der ersten Vorrichtung abgebrochen wird, wenn die das Fahrmanöver ablehnende Fahrmanöverantwort vor Ablauf des zeitlichen Ausführungsfensters empfangen wird.

3. Verfahren nach Anspruch 1, wobei das Fahrmanöver von der ersten Vorrichtung abgebrochen wird, wobei das Verfahren ferner das Senden einer zweiten Fahrzeug-zu-Fahrzeug-Nachricht mit der Fahrmanöveranforderung zu einer dritten Vorrichtung beinhaltet, wobei die zweite Fahrzeug-zu-Fahrzeug-Nachricht ein zweites zeitliches Ausführungsfenster umfasst, das einen zweiten Zeitraum definiert, in dem das Fahrmanöver eingeleitet wird.

4. Verfahren nach Anspruch 1, wobei das Senden der Fahrzeug-zu-Fahrzeug-Nachricht mit der Fahrmanöveranforderung zur zweiten Vorrichtung entweder das direkte Senden der Fahrzeug-zu-Fahrzeug-Nachricht zur zweiten Vorrichtung oder das Senden der Fahrzeug-zu-Fahrzeug-Nachricht zur zweiten Vorrichtung über eine RSU (Road Side Unit) beinhaltet.

5. Verfahren nach Anspruch 1, wobei die Fahrzeug-zu-Fahrzeug-Nachricht eine Anfangszeit und das zeitliche Ausführungsfenster umfasst, das entweder den Zeitraum nach der Anfangszeit, zu der das Fahrmanöver eingeleitet wird, oder den Zeitraum vor oder nach der Anfangszeit definiert, zu der das Fahrmanöver eingeleitet wird.

6. Verfahren nach Anspruch 1, das ferner Folgendes beinhaltet:
Senden einer zweiten Fahrzeug-zu-Fahrzeug-Nachricht für ein zweites Fahrmanöver zu einer dritten Vorrichtung in einem dritten Fahrzeug, wobei die Fahrzeug-zu-Fahrzeug-Nachricht ein zweites zeitliches Ausführungsfenster umfasst, das einen zweiten Zeitraum definiert, in dem das zweite Fahrmanöver eingeleitet wird; und
Ausführen des zweiten Fahrmanövers innerhalb des zweiten zeitlichen Ausführungsfensters.

7. Verfahren nach Anspruch 1, das ferner Folgendes beinhaltet:
Senden einer zweiten Fahrzeug-zu-Fahrzeug-Nachricht mit einer zweiten Fahrmanöveranforderung für ein zweites Fahrmanöver zu einer dritten Vorrichtung in einem dritten Fahrzeug, wobei die zweite Fahrzeug-zu-Fahrzeug-Nachricht ein räumliches Fenster umfasst, das einen Entfernungsbereich für einen Anfangsort und/oder einen Endort für das zweite Fahrmanöver definiert.

8. Erste Vorrichtung in einem ersten Fahrzeug, das zum Durchführen von Informationsaustausch zur Ausführung eines Fahrmanövrers durch die erste Vorrichtung im ersten Fahrzeug konfiguriert ist, die Folgendes umfasst:
einen drahtlosen Transceiver, der zum Kommunizieren mit Vorrichtungen in einem drahtlosen Netzwerk konfiguriert ist;
mindestens einen Speicher; und
mindestens einen mit dem drahtlosen Transceiver und dem mindestens einen Speicher gekoppelten Prozessor, wobei der mindestens eine Prozessor konfiguriert ist zum:
Senden, über den drahtlosen Transceiver, einer Fahrzeug-zu-Fahrzeug-Nachricht mit einer Fahrmanöveranforderung für ein Fahrmanöver zu einer zweiten Vorrichtung in einem zweiten Fahrzeug, wobei die Fahrzeug-zu-Fahrzeug-Nachricht ein zeitliches Ausführungsfenster umfasst, das einen Zeitraum definiert, in dem das Fahrmanöver eingeleitet wird (1102);
Warten, über den drahtlosen Transceiver, auf eine Fahrmanöverantwort auf die Fahrmanöveranforderung von der zweiten Vorrichtung vor der Ausführung des Fahrmanövers (1104); und
Ausführen oder Abbrechen des Fahrmanövers, wobei das Fahrmanöver von der ersten Vorrichtung ausgeführt wird, wenn die die Fahrmanöveranforderung akzeptierende Fahrmanöverantwort vor Ablauf des zeitlichen Ausführungsfensters empfangen wird, und das Fahrmanöver von der ersten Vorrichtung abgebrochen wird, wenn die Fahrmanöverantwort nicht vor Ablauf des zeitlichen Ausführungsfensters empfangen wird (1106).

9. Erste Vorrichtung nach Anspruch 8, wobei die Fahrzeug-zu-Fahrzeug-Nachricht ferner einen zweiten Zeitraum umfasst, in dem das Fahrmanöver abgeschlossen wird.

10. Erste Vorrichtung nach Anspruch 8, wobei das Fahrmanöver von der ersten Vorrichtung abgebrochen wird, wenn die das Fahrmanöver ablehnende Fahrmanöverantwort vor Ablauf des zeitlichen Ausführungsfensters empfangen wird.

11. Erste Vorrichtung nach Anspruch 8, wobei der mindestens eine Prozessor zum Senden, über den drahtlosen Transceiver, der Fahrzeug-zu-Fahrzeug-Nachricht mit der Fahrmanöveranforderung zur zweiten Vorrichtung konfiguriert ist, indem er so konfiguriert ist, dass er entweder die Fahrzeug-zu-Fahrzeug-Nachricht direkt zur zweiten Vorrichtung sendet oder die Fahrzeug-zu-Fahrzeug-Nachricht über eine Road Side Unit zur zweiten Vorrichtung sendet.

12. Erste Vorrichtung nach Anspruch 8, wobei die Fahrzeug-zu-Fahrzeug-Nachricht eine Anfangszeit und das zeitliche Ausführungsfenster umfasst, das entweder den Zeitraum nach der Anfangszeit definiert, zu der das Fahrmanöver eingeleitet wird, oder den Zeitraum vor oder nach der Anfangszeit definiert, zu der das Fahrmanöver eingeleitet wird.

13. Erste Vorrichtung nach Anspruch 8, wobei der mindestens eine Prozessor ferner konfiguriert ist zum:
Senden, über den drahtlosen Transceiver, einer zweiten Fahrzeug-zu-Fahrzeug-Nachricht für ein zweites Fahrmanöver zu einer dritten Vorrichtung in einem dritten Fahrzeug, wobei die Fahrzeug-zu-Fahrzeug-Nachricht ein zweites zeitliches Ausführungsfenster umfasst, das einen zweiten Zeitraum definiert, in dem das zweite Fahrmanöver eingeleitet wird; und
Ausführen, über den drahtlosen Transceiver, des zweiten Fahrmanövers innerhalb des zweiten zeitlichen Ausführungsfensters, wobei die zweite Fahrzeug-zu-Fahrzeug-Nachricht optional Informationen für das zweite Fahrmanöver umfasst.

## Revendications

1. Procédé de réalisation d'un échange d'informations pour l'exécution d'une manœuvre par un premier dispositif dans un premier véhicule, le procédé comprenant :
la transmission d'un message inter-véhicules avec une demande de manœuvre de conduite à un deuxième dispositif dans un deuxième véhicule, le message inter-véhicules comprenant une fenêtre d'exécution temporelle définissant une plage de temps durant laquelle la manœuvre de conduite sera lancée (1102) ;
l'attente d'une réponse de manœuvre de conduite par le deuxième dispositif à la demande de manœuvre de conduite avant d'exécuter la manœuvre de conduite (1104) ; et
l'exécution ou l'annulation de la manœuvre de conduite, dans lequel la manœuvre de conduite est exécutée par le premier dispositif si la réponse de manœuvre de conduite acceptant la demande de manœuvre de conduite est reçue avant l'expiration de la fenêtre d'exécution temporelle et la manœuvre de conduite est annulée par le premier dispositif si la réponse de manœuvre de conduite n'est pas reçue avant l'expiration de la fenêtre d'exécution temporelle (1106).

2. Procédé selon la revendication 1, dans lequel le message inter-véhicules comprend en outre une seconde plage de temps durant laquelle la manœuvre de conduite sera achevée et/ou
dans lequel la manœuvre de conduite est annulée par le premier dispositif si la réponse de manœuvre de conduite rejetant la manœuvre de conduite est reçue avant l'expiration de la fenêtre d'exécution temporelle.

3. Procédé selon la revendication 1, dans lequel la manœuvre de conduite est annulée par le premier dispositif, le procédé comprenant en outre la transmission d'un second message inter-véhicules avec la demande de manœuvre de conduite à un troisième dispositif, le second message inter-véhicules comprenant une seconde fenêtre d'exécution temporelle définissant une seconde plage de temps durant laquelle la manœuvre de conduite sera lancée.

4. Procédé selon la revendication 1, dans lequel la transmission du message inter-véhicules avec la demande de manœuvre de conduite au deuxième dispositif comprend soit la transmission du message inter-véhicules au deuxième dispositif directement, soit la transmission du message inter-véhicules au deuxième dispositif par l'intermédiaire d'une unité de bord de route.

5. Procédé selon la revendication 1, dans lequel le message inter-véhicules comprend un temps initial et la fenêtre d'exécution temporelle soit définissant la plage de temps après le temps initial durant laquelle la manœuvre de conduite sera lancée, soit définissant la plage de temps avant ou après le temps initial durant laquelle la manœuvre de conduite sera lancée.

6. Procédé selon la revendication 1, comprenant en outre :
la transmission d'un second message inter-véhicules pour une seconde manœuvre de conduite à un troisième dispositif dans un troisième véhicule, le message inter-véhicules comprenant une seconde fenêtre d'exécution temporelle définissant une seconde plage de temps durant laquelle la seconde manœuvre de conduite sera lancée ; et
l'exécution de la seconde manœuvre de conduite dans la seconde fenêtre d'exécution temporelle.

7. Procédé selon la revendication 1, comprenant en outre :
la transmission d'un second message inter-véhicules avec une seconde demande de manœuvre de conduite pour une seconde manœuvre de conduite à un troisième dispositif dans un troisième véhicule, le second message inter-véhicules comprenant une fenêtre spatiale définissant une plage de distance pour l'un d'un emplacement de départ ou d'un emplacement d'arrêt, ou les deux pour la seconde manœuvre de conduite.

8. Premier dispositif dans un premier véhicule configuré pour réaliser un échange d'informations pour l'exécution d'une manœuvre par le premier dispositif du premier véhicule, comprenant :
un émetteur-récepteur sans fil configuré pour communiquer avec des dispositifs dans un réseau sans fil ;
au moins une mémoire ; et
au moins un processeur couplé au récepteur sans fil et au moins une mémoire, l'au moins un processeur étant configuré pour :
transmettre, par l'intermédiaire du récepteur sans fil, un message inter-véhicules avec une demande de manœuvre de conduite à un deuxième dispositif dans un deuxième véhicule, le message inter-véhicules comprenant une fenêtre d'exécution temporelle définissant une plage de temps durant laquelle la manœuvre de conduite sera lancée (1102) ;
attendre, par l'intermédiaire du récepteur sans fil, une réponse de manœuvre de conduite par le deuxième dispositif à la demande de manœuvre de conduite avant d'exécuter la manœuvre de conduite (1104) ; et
exécuter ou annuler la manœuvre de conduite, dans lequel la manœuvre de conduite est exécutée par le premier dispositif si la réponse de manœuvre de conduite acceptant la demande de conduite est reçue avant l'expiration de la fenêtre d'exécution temporelle et la manœuvre de conduite est annulée par le premier dispositif si la réponse de conduite n'est pas reçue avant l'expiration de la fenêtre d'exécution temporelle (1106).

9. Premier dispositif selon la revendication 8, dans lequel le message inter-véhicules comprend en outre une seconde plage de temps durant laquelle la manœuvre de conduite sera achevée.

10. Premier dispositif selon la revendication 8, dans lequel la manœuvre de conduite est annulée par le premier dispositif si la réponse de manœuvre de conduite est reçue avant l'expiration de la fenêtre d'exécution temporelle.

11. Premier dispositif selon la revendication 8, dans lequel l'au moins un processeur est configuré pour transmettre, par l'intermédiaire de l'émetteur-récepteur sans fil, le message inter-véhicules avec la demande de manœuvre de conduite au deuxième dispositif, étant configuré pour soit transmettre le message inter-véhicules au deuxième dispositif directement, soit transmettre le message inter-véhicules au deuxième dispositif par l'intermédiaire d'une unité de bord de route.

12. Premier dispositif selon la revendication 8, dans lequel le message inter-véhicules comprend un temps initial et une fenêtre d'exécution temporelle soit définissant la plage de temps après le temps initial durant laquelle la manœuvre de conduite sera lancée, soit définissant la plage de temps avant ou après le temps initial durant laquelle la manœuvre de conduite sera lancée.

13. Premier dispositif selon revendication 8, dans lequel l'au moins un processeur est configuré en outre pour :
transmettre, par l'intermédiaire de l'émetteur-récepteur sans fil, un second message inter-véhicules pour une seconde manœuvre de conduite à un troisième dispositif dans un troisième véhicule, le message inter-véhicules comprenant une seconde fenêtre d'exécution temporelle définissant une seconde plage de temps durant laquelle la seconde manœuvre de conduite sera lancée ; et
exécuter, par l'intermédiaire de l'émetteur-récepteur sans fil, la seconde manœuvre de conduite dans la seconde fenêtre d'exécution temporelle, et éventuellement dans lequel le second message inter-véhicules comprend des informations pour la seconde manœuvre de conduite.
